# EUROPEAN PATENT APPLICATION

(11) **EP 2 719 974 A1**
(43) Date of publication of application: **16.04.2014**
(21) Application number: 12188130.4
(22) Date of filing: 11.10.2012
(51) Int. Cl.: F24J 2/46, F24J 2/52, H01L 31/048

(54) **A sloping roof**

(71) Applicant: SUN TECHNOLOGY S.a.s. di Lucarini Fabio & C., 59024 Vernio (PO) (IT)
(72) Inventor: Lucarini, Fabio, 59024 VERNIO (PO) (IT)
(74) Representative: Dall'Olio, Christian

(57) **Abstract**

A sloping roof (1), comprising: a sloping support frame (2); a plurality of photovoltaic modules (3) having an imbricated arrangement; a plurality of brackets (5) which are arranged such as to retain the plurality of photovoltaic modules (3), each bracket (5) comprising: a first sheet (11) which forms a first end of the bracket (5); and a hook-shaped element (6) conformed such as to receive the end of a photovoltaic module (3). The photovoltaic modules (3) of each row (4) of photovoltaic modules (3) are distanced from one another forming interstices (7) for compensating thermal dilation; each photovoltaic module (3) is aligned with an adjacent photovoltaic module (3) of an adjacent row of photovoltaic modules (3) such that a plurality of openings (9) is identified by the joining of a plurality of interstices (7). Each bracket (5) further comprises: a second sheet (12) and a third sheet (13). The sloping roof further comprises: a plurality of profiled members (8) for outflow of rainwater which drains through the plurality of openings (9), each profiled member (8) forming a drainage channel (14) and two sides (15, 19); a plurality of seals (10) which cover the sides (15, 19); the sides (15, 19) and the plurality of seals (10) being dimensioned such as to supportingly receive the photovoltaic modules (3) and to convey the rainwater towards the drainage channels (14) which rainwater drains though the openings (9) of the plurality of openings (9) and which flows by adhesion along the lower walls of the photovoltaic modules (3).

## Description

The present invention relates to the technical sector concerning sloping roofs. In particular, the invention relates to a sloping roof comprising a plurality of photovoltaic modules.

Italian patent for utility model no. IT0000261001 concerns a sloping roof including a plurality of photovoltaic modules replacing tiles: the photovoltaic modules produce electrical energy and perform the same function as the tiles in relation to protection from atmospheric agents and drainage of rainwater towards an underlying gutter. The sloping roof comprises: a sloping support frame which is composed of a plurality of beams that are parallel to one another, equidistanced and each horizontally orientated; a plurality of photovoltaic modules which are arranged above the beams to form horizontal parallel rows of photovoltaic modules having an imbricated arrangement such that an upper row superposes partially on a lower row; and a plurality of brackets having an S-conformation such that each, by an end thereof, can grip a beam, and retain, by an opposite end thereof, retain a photovoltaic module.

Each photovoltaic module is parallelepiped in shape and internally comprises a plurality of photovoltaic cells. The photovoltaic cells are distributed only on a part of the photovoltaic module such as to be always exposed to sunlight when the photovoltaic modules are arranged such as to form the above-mentioned imbricated arrangement; in other words, the part of the photovoltaic module covered by an overlying photovoltaic module, and which therefore would not be exposed to sunlight, does not comprise solar cells.

However, an imbricated arrangement of the photovoltaic modules and such a distribution of the solar cells internally of each photovoltaic module is also known from the less-recent document JP8144440.

The sloping roof of the prior art is however susceptible to drawbacks.

The photovoltaic modules that replace the tiles of the sloping roof are exposed to different temperatures during the course of a year, and it is necessary to take account of the intrinsic thermal dilation thereof; photovoltaic modules of a same row have therefore to be spaced from one another (for example by 2 or 3 mm) in order to allow for thermal dilation; otherwise they can get damaged. As a consequence, the rainwater can infiltrate into the interstice between one photovoltaic module and another and to prevent this a supplementary waterproof cover is fitted below the photovoltaic modules. The beams, however, form a barrier for the drainage of the water towards a gutter located on the external perimeter of the sloping roof, which leads to an undesired stagnation of the rainwater, which can stretch even for many hours after the rain has ceased.

On sunny days, on the other hand, the presence of the beams does not enable air to flow below the photovoltaic modules so as to cool them.

The aim of the present invention consists in obviating the above-mentioned drawbacks.

The aim is obtained by means of a sloping roof according to claim 1.

The photovoltaic modules are supported by the sides of the profiled members and by the seals, and are retained by the brackets; therefore, the photovoltaic modules are arranged at a certain height with respect to the sloping support frame and this facilitates air circulation along conduits defined between the photovoltaic modules and the support frame; the air that enters from below to inside these conduits is conveyed naturally towards the outlet, located at a greater height, due to the fact that the air heats progressively because of the thermal exchange that takes place between it and the photovoltaic modules. The flow of circulating air below the photovoltaic modules advantageously cools the photovoltaic modules, improving the performance thereof; the air present between the photovoltaic modules and the sloping support frame thermally insulates the inside of the building, on which the sloping roof is mounted, with respect to the outside.

The part of rainwater which drains through the openings is collected by the channels of the profiled members and can be conveyed towards the underlying gutter; the water is thus advantageously immediately evacuated from the roof and it is not necessary to have recourse to a supplementary waterproof cover, as in the prior art; further, the air channels formed below the photovoltaic modules rapidly dry the parts that have entered into contact with the water during a storm (profiled members and seals) and prevent the formation of damp.

Specific embodiments of the invention will be described in the following of the present description, according to what is set down in the claims and with the aid of the accompanying tables of drawings, in which:
figure 1 is a plan view of a partly-assembled sloping roof, object of the present invention;
figure 2 is a view of section II-II of figure 1;
figure 2A is a view of the enlarged detail K1 of figure 2;
figure 3 is a view of section III-II of figure 1;
figure 3A is a view of the enlarged detail K2 of figure 3;

With reference to the accompanying drawings, (1) denotes in its entirety the sloping roof of the present invention, comprising: a sloping support frame (2), a plurality of photovoltaic modules (3) which are arranged above the support sloping frame (2) such as to form parallel rows (4) of photovoltaic modules (3) having an imbricated arrangement such that an upper row (4) partially superposes a lower row (4).

The photovoltaic modules (3) of each row (4) are coplanar.

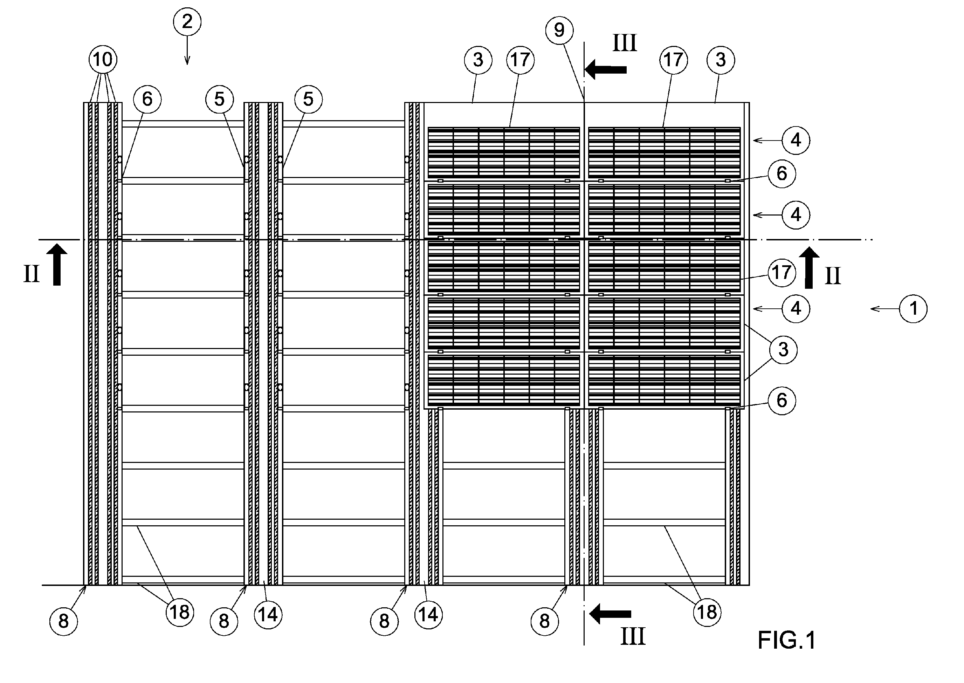

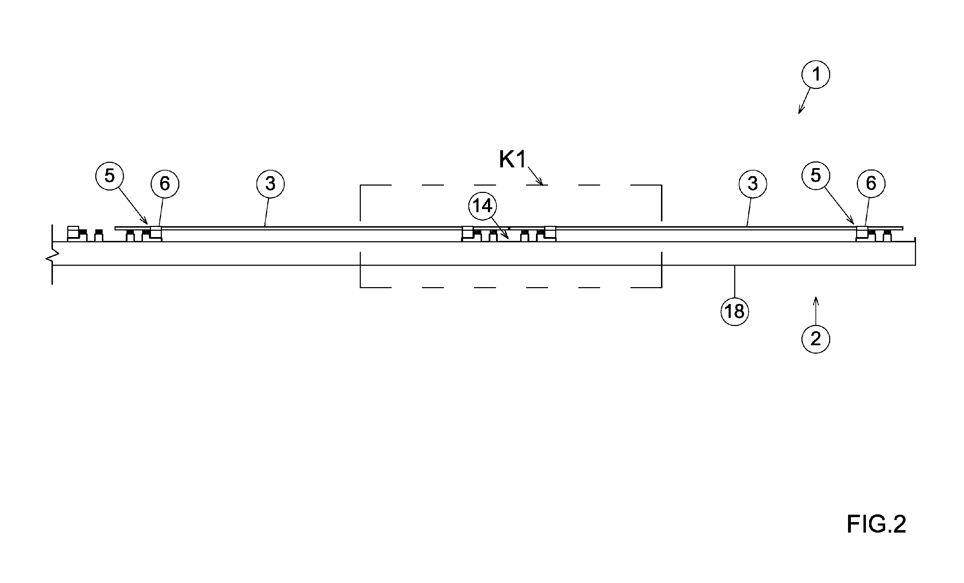

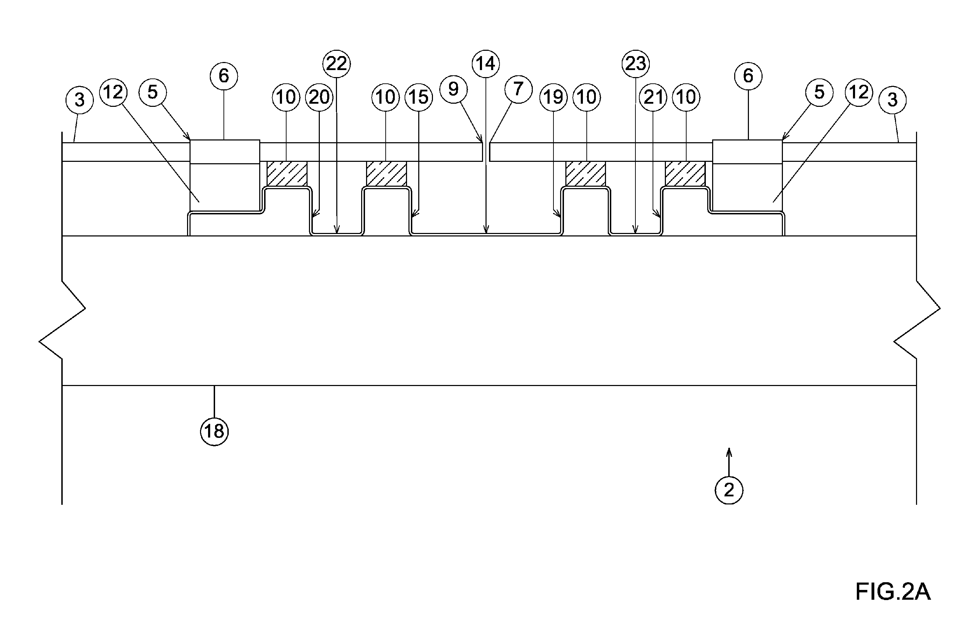

The roof (1) further comprises a plurality of brackets (5) which are arranged such as to retain the plurality of photovoltaic modules (3), each bracket (5) comprising: a first sheet (11) which forms a first end of the bracket (5); and a hook-shaped element (6) conformed such as to receive the end of a photovoltaic module (3). The photovoltaic modules (3) of each row (4) of photovoltaic modules (3) are distanced from one another, forming interstices (7) for compensating the intrinsic thermal dilation of each photovoltaic module (3); each photovoltaic module (3) of a row of photovoltaic modules (3) is aligned with an adjacent photovoltaic module (3) of an adjacent row of photovoltaic modules (3) such that a plurality of openings (9) is identified (figures 1, 2A), arranged perpendicularly to the rows (4) of photovoltaic modules (3) and each formed by a joining of a plurality of interstices (7).

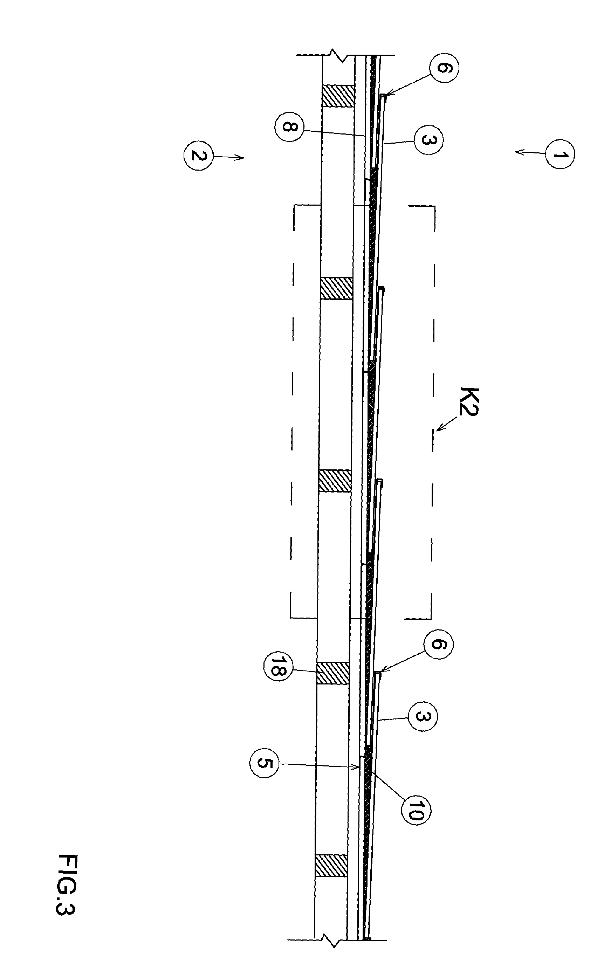

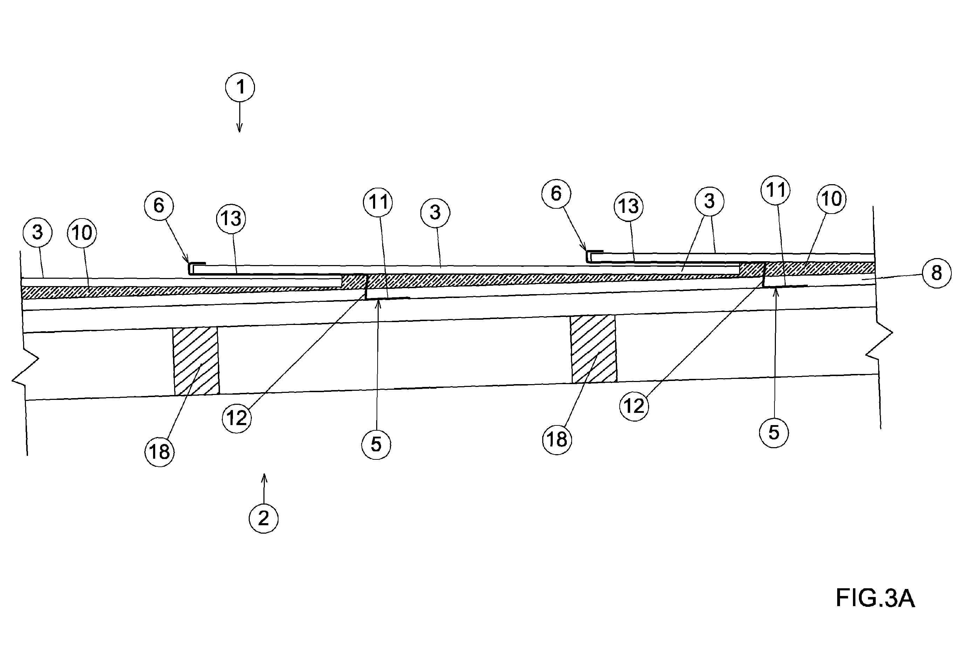

The first sheet (11) of each bracket (5) is fixed to the sloping support frame (2). Each bracket (5) further comprises: a second sheet (12) fixed to the first sheet (11) which erects from the first sheet (11) forming a first angle with the first sheet (11); a third sheet (13) (figure 3A) fixed projectingly to the second sheet (12), which forms a second angle with the second sheet (12) and which bears, at a relative free end thereof, the hook-shaped element (6).

The sloping roof (1) further comprises a plurality of profiled members (8) for outflow of rainwater which drains through the plurality of openings (9), each profiled member (8) being fixed to the sloping support frame (2) and forming a drainage channel (14) and two sides (15, 19) which delimit the drainage channel (14); each profiled member (8) is arranged such that the relative drainage channel (14) faces a corresponding opening (9) of the plurality of openings (9).

The sloping roof (1) further includes a plurality of seals (10) which develop in a longitudinal direction, which are made of an elastically yielding material and which each cover a side of the plurality of profiled members (8).

The sides (15, 19) of the plurality of profiled members (8) and the plurality of seals (10) are dimensioned such as to supportingly receive the photovoltaic modules (3) and to convey the rainwater towards the drainage channels (14) which rainwater is draining though the openings (9) of the plurality of openings (9) and which flows by adhesion along the lower walls of the photovoltaic modules (3).

The seals (10) that cover the sides (15, 19) provide a large yielding support surface for the photovoltaic modules (3), which renders the photovoltaic modules (3) fit for walking on without risk of breakage.

Each photovoltaic module (3) is preferably parallelepiped and internally comprises a plurality of photovoltaic cells (17). The photovoltaic cells (17) are distributed only on a part of the photovoltaic module (3) such as to be always exposed to sunlight when the photovoltaic modules (3) are arranged to form the imbricated arrangement; in other words, the part of the photovoltaic module (3) that is covered by an overlying photovoltaic module (3), and that therefore it is not exposed to sunlight, does not include solar cells.

The sloping support frame (2) is constituted for example by a plurality of beams (18) which are regularly interspaced, parallel and horizontally oriented (figures 1, 3).

The brackets (5) can be fixed directly to the profiles (8).

As mentioned above (see in particular figure 2A) each profiled member (8) comprises a first drainage channel (14), which lies below and faces a corresponding opening (9), and a first side (15) and a second side (19) which delimit the first flow channel (14). Additionally, each profiled member (8) can also form a third side (20) which is adjacent to the first side (15) and a fourth side (21) which is adjacent to the second side (19); between the third side (20) and the first side panel (15) the profiled member (8) forms a second drainage channel (22) of the water and between the fourth side (21) and the second side (19) the profiled member (8) forms a third drainage channel ( 23) of the water; the plurality of seals (10) also cover the third side (20) and the fourth side (21).

The third side (20) and the fourth side (21) and seals (10) that cover them are also dimensioned such as to supportingly receive, and thus contact, the photovoltaic modules (3) and to convey, towards the outflow channels (14), the rain water that drains through the openings (9) and flows by adhesion along the lower walls of the photovoltaic modules (3). In particular, the third side (20), the fourth side (21), the second drainage channel (22) and the third drainage channel (23) perform a supplementary function to the first drainage channel (14) and the first side (15) and the second side (19): the rainwater that flows by adhesion along the lower walls of the photovoltaic modules (3) and that passes beyond the seals (10) covering the first side panel (15) and the second side (19) can be conveyed to the outside by the second drainage channel (22) and by the third drainage channel (23) also due to the presence of the gaskets (10) covering the third side (20) and the fourth side (21).

Figure 1 shows the sloping roof (1) in a partially assembled state, in which ten photovoltaic modules are arranged (3) in five rows (4); two photovoltaic modules (3) are positioned side by side in each row (4), so that an opening (9) is identified, formed by the union of the interstices (7) between the photovoltaic modules (3) of each row (4).

Figure 2A clearly shows an interstice (7) for enabling thermal expansion between adjacent photovoltaic modules (3) of a row (4) of photovoltaic modules (3). The rainwater that drains through the interstice (7) is collected in the first drainage channel (14) and conveyed towards the outside; if a part of the rainwater flowing by adhesion along the lower walls of the photovoltaic modules (3) passes beyond the seals (10) covering the first side (15) and the second side (19) said part of the rainwater can be collected in the second flow channel (22) or in the third flow channel (23) and be conveyed towards the outside.

The profiles (8) are fixed to the sloping support frame (2) are consequently also inclined downwards, which facilitates the flow of water by gravity.

It is understood that the above has been described by way of non-limiting example, and possible constructive variations are therefore considered to fall within the protective scope of the present technical solution, as claimed in the following.

## Claims

1. A sloping roof (1), comprising:
a sloping support frame (2);
a plurality of photovoltaic modules (3) which are arranged above the support sloping frame (2) such as to form parallel rows (4) of photovoltaic modules (3) having an imbricated arrangement such that an upper row (4) partially superposes a lower row (4), the photovoltaic modules (3) of each row (4) being coplanar;
a plurality of brackets (5) which are arranged such as to retain the plurality of photovoltaic modules (3), each bracket (5) comprising: a first sheet (11) which forms a first end of the bracket (5); and a hook-shaped element (6) conformed such as to receive an end of a photovoltaic module (3);
the sloping roof (1) being **characterised in that:**
the photovoltaic modules (3) of each row (4) of photovoltaic modules (3) are distanced from one another forming interstices (7) for compensating an intrinsic thermal dilation of each photovoltaic module (3);
each photovoltaic module (3) of a row of photovoltaic modules (3) is aligned with an adjacent photovoltaic module (3) of an adjacent row of photovoltaic modules (3) such that a plurality of openings (9) is identified, arranged perpendicularly to the rows (4) of photovoltaic modules (3) and each formed by a joining of a plurality of interstices (7);
the first sheet (11) of each bracket (5) is fixed to the sloping support frame (2);
each bracket (5) further comprises: a second sheet (12) fixed to the first sheet (11) and which erects from the first sheet (11) forming a first angle with the first sheet (11); a third sheet (13) fixed projectingly to the second sheet (12), which forms a second angle with the second sheet (12) and which bears, at a relative free end thereof, the hook-shaped element (6);
a plurality of profiled members (8) for outflow of rainwater which drains through the plurality of openings (9), each profiled member (8) being fixed to the sloping support frame (2) and forming a drainage channel (14) and two sides (15, 19) which delimit the drainage channel (14), each profiled member (8) being arranged such that the drainage channel (14) thereof faces an opening (9) of the plurality of openings (9);
a plurality of seals (10) which develop in a longitudinal direction, which are made of an elastically yielding material and which cover the sides (15, 19) of the plurality of profiled members (8);
the sides (15, 19) of the plurality of profiled members (8) and the plurality of seals (10) being dimensioned such as to supportingly receive the photovoltaic modules (3) and to convey the rainwater towards the drainage channels (14) which rainwater drains though the openings (9) of the plurality of openings (9) and which flows by adhesion along the lower walls of the photovoltaic modules (3).
